# EUROPEAN PATENT APPLICATION

(11) **EP 4 778 761 A1**
(43) Date of publication of application: **22.07.2026**
(21) Application number: 25152207.4
(22) Date of filing: 16.01.2025
(51) Int. Cl.: B60K 17/16, B60K 1/00, F16H 57/04, F16H 57/08

(54) **GEARING FOR A VEHICLE**

(71) Applicant: ZF Friedrichshafen AG, 88046 Friedrichshafen (DE)
(72) Inventor: Kong, Yunlai, Shanghai, 201615 (CN); Wang, Yanghao, Shanghai, 201615 (CN); Cheng, Feibo, Shanghai, 201615 (CN)
(74) Representative: WBH Wachenhausen Patentanwälte PartG mbB

(57) **Abstract**

The invention relates to a gearing (10) for a vehicle (1). The gearing comprises a rotating element (6) and a planetary gear set (70) with multiple planetary gear elements (71, 72, 73, 74, 75, 76). The gearing comprises a lubricant supply (60), a housing portion (12), a first lubrication path (20) and a second lubrication path (40). The gearing is configured to supply lubricant for lubrication independently from any rotation of any of the planetary gear elements of the planetary gear set. The lubricant is supplied from the lubricant supply via the first lubrication path (20) through the housing portion (12) to the rotating element (6). The lubricant is supplied from the rotating element (6) via the second lubrication path (40) to one of the planetary gear elements (71) formed as a sun gear. The invention also relates to a vehicle with the gearing.

## Description

### Technical field

The present invention relates to a gearing for a vehicle, and to a vehicle comprising such a gearing.

### Prior art

Gearings for vehicles are known. In some cases, the gearing is provided with a planetary gear set with multiple elements. In such gearings, lubrication of the elements of the planetary gear set may be necessary. A rotation of an element of the planetary gear set may be used for assisting a lubricant flow towards some elements for lubrication, for example by splashing lubricant into a baffle plate and/or by transporting lubricant via centrifugal forces. Under certain conditions, the rotation may be insufficient for providing an appropriate lubricant flow, for example during high loads at low driving speeds corresponding to low rotational speeds of the elements of the planetary gear set. Furthermore, some of the elements of the planetary gear set may be located near a central axis of the planetary gear set such that centrifugal forces may hinder their lubrication.

### Summary of the invention

The present disclosure relates in a first aspect to a gearing for a vehicle. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a driving unit for directly or indirectly driving the gearing by applying power thereto. The driving unit may comprise an internal combustion engine and/or an electric motor. The driving unit may receive energy from an energy storage, for example a tank or a battery, and convert it to rotational mechanical energy, for example to a driving power for the gearing. The gearing may comprise an input shaft and one or more output shafts. At least one output shaft of the gearing may be mechanically operatively connected to a drive element of the vehicle. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The gearing may be provided as a distribution gearing for distributing power between two output shafts. The gearing may also comprise a differential function. The drive element may be, for example, a wheel for contacting the ground or a drive wheel or sprocket for tracks. The vehicle may comprise a shiftable transmission disposed in a power flow between the driving unit and the drive element.

The gearing comprises a rotating element and a planetary gear set with multiple planetary gear elements. The rotating element may be any element of the gearing configured to rotate in at least one operational state of the vehicle. Examples for the rotating element may include a shaft, for example an input shaft, an output shaft or an intermediate shaft of the gearing, a gear, for example a spur gear, a planetary gear or a bevel gear, and a shifting element, for example a clutch. Examples for the planetary gear elements may include a sun gear, a planetary carrier, a planetary pin, a planetary bearing, a planetary gear and a ring gear. The gearing may comprise more than one planetary gear sets. In case multiple planetary gear sets are present, they may be configured identically or differently from each other.

The gearing comprises a lubricant supply. The lubricant supply may be configured for providing a lubricant for lubricating at least one element of the gearing. The lubricant may also be configured for a cooling functionality of cooling the element of the gearing. The lubricant may be provided as an oil, for example. The lubricant supply may include elements for supplying the lubricant as a pressurized lubricant. For example, the lubricant supply may comprise a lubricant pump for selectively pressurizing the lubricant. The lubricant pump may be electrically operated and/or mechanically coupled to the driving unit for operation. The lubricant pump may be configured so as to be operable independently from any rotation of the gearing. Alternatively or additionally, the lubricant supply may comprise means other than the lubricant pump for passively pressurizing the lubricant, for example by means of a gravity induced hydrostatic pressure. For example, the lubricant supply may comprise a lubricant tank mounted at a higher level than an entry point of the lubricant into the gearing.

The gearing further comprises a housing portion. The housing portion may be part of a housing. The housing may be provided as one or several casings for enclosing stationary and/or rotational components of the gearing and/or the driving unit. The housing may also be configured as a stationary member for providing support and for receiving forces and torques. The housing may comprise several detachable housing portions. Each housing portion may be configured to accommodate and support different components. For example, the housing may comprise one or more gearing housing portions for enclosing and rotatably supporting the gearing. For example, the housing may comprise one or more driving unit housing portions for enclosing and rotatably supporting the driving unit. The exemplary housing portions may be mounted to each other or formed integrally with each other.

The gearing is configured to supply lubricant for lubrication independently from any rotation of any of the planetary gear elements of the planetary gear set. The lubricant may be provided by the gearing independently of the rotations, for example rotational speeds, of any of the planetary gear elements. For example, the lubricant may be actively and/or passively pressurized as described above to a pressure level sufficient for overcoming pressure losses along lubrication paths to respective elements to be lubricated, regardless of the presence and/or speed of element rotations in the planetary gear set.

The gearing comprises a first lubrication path. The lubricant is supplied from the lubricant supply via the first lubrication path through the housing portion to the rotating element. The first lubrication path may be formed for providing a fluid communication between the rotating element and the lubricant supply via the housing portion. For example, the first lubrication path may comprise one or more channels formed in the housing portion. The housing portion may be configured to receive lubricant from the lubricant supply and to transfer the lubricant directly or indirectly to the rotating element.

For example, the housing portion may comprise a ring channel surrounding the rotating element for transferring lubricant when relative rotation between the housing portion and the rotating element is present and/or for spreading lubricant in a circumferential direction. The rotating element may be configured for receiving lubricant from the lubricant supply via the first lubrication path. Alternatively or additionally, the rotating element may be configured to receive lubricant from other sources or paths. The rotating element may be lubricated by the received lubricant and/or may pass at least parts of the received lubricant to other elements of the gearing, for example to other planetary gear elements. The first lubrication path may have a plurality of lubrication path sections. Different lubrication path sections may be formed in different elements. For example, respective lubrication path sections may be formed in the housing, e.g. in the housing portion, in the rotating element, in an element of the planetary gear set and/or in another cavity or volume present between at least a pair of elements.

The gearing comprises a second lubrication path. The lubricant is supplied from the rotating element via the second lubrication path to one of the planetary gear elements. The one of the planetary gear elements is formed as a sun gear. The one planetary gear element formed as a sun gear may define a central axis of the planetary gear set, around which other elements of the planetary gear set rotate. The second lubrication path may be formed for providing a fluid communication between the one planetary gear element and the lubricant supply via the rotating element and the first lubrication path. The one planetary gear element may be configured for receiving lubricant from the second lubrication path. Alternatively or additionally, the one planetary gear element may be configured to receive lubricant from other sources. The gearing may be configured to supply lubricant directly to the one planetary gear element, for example by ejecting the lubricant onto the one planetary gear element. In an example, the gearing may comprise a nozzle for spraying the lubricant onto the one planetary gear element as droplets. In an example, the gearing may comprise an opening for ejecting the lubricant onto the one planetary gear element as a stream. In an example, the gearing may comprise an opening for dripping lubricant onto the one planetary gear element as drops. The one planetary gear element may be lubricated by the received lubricant and/or may pass at least parts of the received lubricant to other elements of the gearing, for example to other planetary gear elements. The second lubrication path may have a plurality of lubrication path sections. Different lubrication path sections may be formed in different elements. For example, respective lubrication path sections may be formed in the rotating element, in the one element of the planetary gear set, in another element of the planetary gear set and/or in another cavity or volume present between at least a pair of elements.

With the gearing according to the first aspect, the lubricant supply and the first and second lubrication paths are provided such that a rotation of the planetary gear set is not necessary for enabling or assisting lubricant flow to the one planetary gear element formed as a sun gear. Accordingly, it is possible to provide sufficient lubricant to the sun gear even when the planetary gear set is not rotating at all or only rotates slowly, for example in low speed and high load driving conditions like off-road driving. Furthermore, the supply of lubricant to the one planetary gear element is more stable in other driving conditions, even such in which lubricant flow towards the sun gear is hindered by centrifugal forces caused by high-speed rotations of some planetary gear elements. Thus, the gearing of the first aspect achieves proper lubrication throughout a wide range of driving conditions.

In an embodiment, the gearing comprises a lubrication path section of a lubrication path formed between the rotating element and a further rotating element. The lubrication path section may be a part of the second lubrication path. Alternatively or additionally, the lubrication path section may be a part of another lubrication path, for example a third lubrication path described further in the following. The further rotating element may be any element of the gearing configured to rotate in at least one operational state of the vehicle. Examples for the further rotating element may include a shaft, a gear, a planetary gear element or a shifting element, for example a clutch. The rotating element and the further rotating element may rotate relative to each other in at least one operational state of the vehicle. The rotating element and the further rotating element may serve as a pair of elements forming the lubrication path section therebetween. The rotating element and the further rotating element may be spaced apart in a region of the lubrication path section such that each of the rotating element and the further rotating element at least partially delimits an extent of the lubrication path section. For example, the further rotating element may be coaxial to the rotating element and may partially extend into the rotating element, such that an annular cavity is formed as the lubrication path section being a part of a lubrication path. In such an example, the lubrication path section may be provided across at least a part of a circumference of the further rotating element. At least a portion of the lubrication path section may extend in an axial direction. Alternatively or additionally, at least a portion of the lubrication path section may extend in a radial direction. Alternatively or additionally, at least a portion of the lubrication path section may extend obliquely, namely in a direction having components along both the axial and radial directions.

In an embodiment, the second lubrication path comprises a further lubrication path section formed in the further rotating element for receiving lubricant from the lubrication path section of the second lubrication path and for guiding the received lubricant towards the one planetary gear element. The lubrication path section and the further lubrication path section may be in fluid communication with each other, for example by being directly connected. The further lubrication path section may comprise at least one lubrication path channel extending through the further rotating element. The lubrication path channel of the further lubrication path section may extend in the axial and/or radial directions, for example obliquely, through the further rotating element. For example, the lubrication path channel may open at one end in a direction towards the lubrication path section of the second lubrication path for receiving lubricant. For example, the lubrication path channel may open at another end in a direction towards the one planetary gear element for delivering the received lubricant to the one planetary gear element. For example, the lubrication path channel may comprise at the other end an ejecting device for ejecting the lubricant onto the one planetary gear element. In case multiple lubrication path channels are provided, they may be in fluid communication with each other, for example by intersecting each other, for guiding the lubricant from the lubrication path section towards the one planetary gear element.

In an embodiment, the gearing comprises a third lubrication path. The lubricant may be supplied from the rotating element via the third lubrication path to another of the planetary gear elements. The other planetary gear element may be any of the elements of the planetary gear set described above. The other planetary gear element may be configured for receiving lubricant from the third lubrication path. Alternatively or additionally, the other planetary gear element may be configured to receive lubricant from other sources. The other planetary gear element may be lubricated by the received lubricant and/or may pass at least parts of the received lubricant to further elements of the gearing, for example to further planetary gear elements.

In an embodiment, the lubrication path comprises a further lubrication path section formed in the further rotating element for receiving lubricant from the lubrication path section of the third lubrication path and for guiding the received lubricant towards the other planetary gear element. The lubrication path section and the further lubrication path section of the third lubrication path may be in fluid communication with each other, for example by being directly connected. The further lubrication path section of the third lubrication path may comprise at least one lubrication path channel extending through the further rotating element. The at least one lubrication path channel of the third lubrication path may extend in the axial and/or radial directions. For example, an end of a lubrication path channel may open in a direction towards the lubrication path section for receiving lubricant. For example, an end of a further lubrication path channel may open in a direction towards the other planetary gear element for delivering the received lubricant to the other planetary gear element. The two lubrication path channels may be in fluid communication, for example by intersecting each other at their respective other ends, for guiding the lubricant from the lubrication path section towards the other planetary gear element.

In an embodiment, the further rotating element is formed as a planetary carrier of the planetary gear set. In an embodiment, the planetary carrier comprises a planetary pin on which the other planetary gear element is mounted. The third lubrication path may comprise an additional lubrication path section formed in the planetary pin for receiving lubricant from a section of the third lubrication path and for guiding the received lubricant towards the other planetary gear element. For example, the additional lubrication path section may comprise one or more planetary channels extending axially, radially and/or obliquely through the planetary pin. The additional lubrication path section, for example one of the planetary channels, may be configured for fluid communication with the remainder of the third lubrication path, for example the lubrication path section or the further lubrication path section of the third lubrication path. The additional lubrication path section may be configured for guiding the lubricant towards the other planetary gear element by changing its flow direction, for example via the planetary channel or channels. The other planetary gear element, which is to receive lubricant via the third lubrication path for lubrication, may comprise at least one of a planetary bearing and a planetary gear. In one example, both a planetary bearing and a planetary gear are provided. In such an example, the planetary pin and the planetary bearing may be configured to enable a flow of at least a part of the lubricant received by the planetary pin to the planetary gear. A further element of the planetary gear set meshing with the planetary gear, for example a sun gear or a ring gear, may also directly or indirectly receive a part of the lubricant from the planetary pin. In an example, the one planetary gear element formed as a sun gear may receive lubricant both directly from the second lubrication path and indirectly via the planetary gear receiving lubricant from the third lubrication path.

In an embodiment, the rotating element is formed as an output shaft. In an example, the planetary carrier may be rotatably supported within the output shaft via a bearing arranged in the second or third lubrication path. For example, the bearing may be arranged in the lubrication path section extending at least partially between the rotating element and the further rotating element, namely between the output shaft and the planetary carrier. The bearing may be configured to allow a flow of lubricant therethrough. Alternatively or additionally, bypass channels for allowing a flow of lubricant around the bearing may be provided in at least one of the rotating element and the further rotating element.

In an embodiment, the gearing comprises a seal element configured to seal the lubrication path section between the rotating element and the further rotating element while allowing relative rotation between the rotating element and the further rotating element. The seal element may comprise a portion configured to be in contact with both of the rotating element and the further rotating element so as to inhibit leakage of lubricant therebetween. The seal element may extend at least partially in a circumferential direction around the axial direction. In one example, the seal element may comprise an annular shape. The seal element may be formed so as to surround and contact the further rotating element on a radially outer side of the further rotating element, and to contact the rotating element on a radially inner side of the rotating element. In one example, the seal element may be formed as a ring element. In one example, the seal element may comprise an L-shaped cross section. The seal element may be configured allow sliding contact on one or both contact sides. For example, one side of the seal element may be fixed to one of the rotating element and the further rotating element, and another side of the seal element may be configured for sliding contact with the other of the rotating element and the further rotating element. In another example, both sides of the seal element may be configured for sliding contact with the respective one of the rotating element and the further rotating element. In one embodiment, the seal element is fixed to the further rotating element.

In an embodiment, the lubricant supply comprises a lubricant pump for supplying pressurized lubricant to the rotating element. As described above, the lubricant pump may serve to selectively pressurize the lubricant as necessary. For example, the lubricant may be pressurized independently from any rotation of any element of the planetary gear set. Alternatively or additionally, pressurization by the lubricant pump may be adapted to rotational states of the gearing. For example, lubricant pressure may be increased when an element of the planetary gear set rotates in a manner hindering the flow of lubricant to the one planetary gear element. For example, lubricant pressure may be decreased when an element of the planetary gear set rotates in a manner improving the flow of lubricant to the one planetary gear element.

In an embodiment, the gearing comprises a first planetary gear set and a second planetary gear set. The first planetary gear set may comprise at least a first element, a second element and a third element. The second planetary gear set may comprise at least a first element, a second element and a third element. An input shaft may be non-rotatably connected to the first element of the first planetary gear set. The second element of the first planetary gear set may be non-rotatably connected to a first output shaft. The third element of the first planetary gear set may be non-rotatably connected to the first element of the second planetary gear set. The second element of the second planetary gear set may be non-rotatably connected to a stationary member. The third element of the second planetary gear set may be non-rotatably connected to a second output shaft. In the present embodiment, the rotating element is formed by one of the output shafts and the one planetary gear element and the other planetary gear element are each one of the elements of the first and second planetary gear sets.

A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when the switching element is actuated. The non-rotatable connection may be released when the switching element is no longer actuated. The first, second and third elements, for example, may each be a sun gear, a planetary carrier or a ring gear of the respective planetary gear set. In one example, each first element of the planetary gear sets may be a sun gear, each second element of the planetary gear sets may be a planetary carrier and each third element of the planetary gear sets may be a ring gear. The ring gear of the first planetary gear set may be formed integrally with the sun gear of the second planetary gear set. Thereby, a gearing with compact dimensions can be provided. The respective planetary gear set may be a plus or a minus planetary gear set. Each of the planetary gear sets may have planetary gears that may be rotatably mounted on the respective planetary carrier of the one planetary gear set, for example via planetary pins. The planetary gears may mesh with both the sun gear and the ring gear of the respective planetary gear set.

In an embodiment, the rotating element is formed by the second output shaft, and the further rotating element is formed as the second element of the first planetary gear set. For example, the second element of the first planetary gear set may be formed as a planetary carrier. By means of the present embodiment, a simple and compact structure is achieved.

In an embodiment, the gearing comprises a sealing cap covering an axial end of the first output shaft facing the first lubrication path so as to prevent lubricant leakage from the first lubrication path through an element forming the non-rotatable connection of the first output shaft and the second element of the first planetary gear set. The sealing cap may be configured to cover the axial end of the first output shaft in a manner so as to prevent or inhibit lubricant from reaching the element forming the non-rotatable connection. For example, the element forming the non-rotatable connection may be a spline, through which lubricant can generally leak in an axial direction. By providing the sealing cap, lubricant supply to the one planetary gear element and, if applicable, the other planetary gear element can be improved.

In a second aspect, the present disclosure relates to a vehicle. The vehicle comprises a gearing according to the first aspect. The respective advantages and further features can be taken from the description of the first aspect, wherein embodiments of the first aspect also form embodiments of the second aspect and vice versa.

### Brief description of drawings

Figure 1 shows a vehicle with a gearing according to an embodiment of the present disclosure.
Figure 2 schematically shows a general layout of the gearing of the vehicle of Figure 1.
Figure 3 schematically shows a side view of a gearing with the layout of Figure 2 according to an embodiment.
Figure 4 schematically shows a cross-section of the gearing of Figure 3 along a first section line.
Figure 5 schematically shows a cross-section of the gearing of Figure 3 along a second section line.

### Detailed description of embodiments

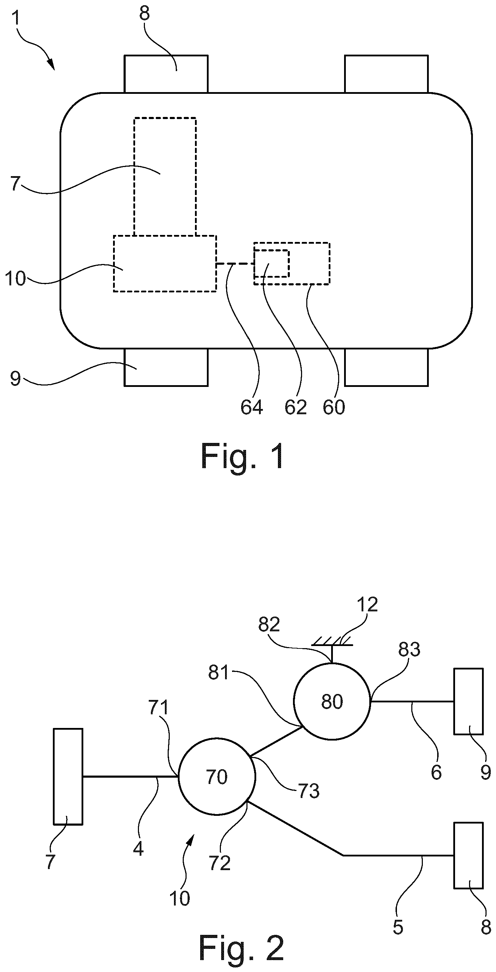

Figure 1 shows a vehicle 1 with a gearing 10 according to an embodiment of the present disclosure. The vehicle 1 comprises a driving unit 7 presently formed as an electric motor. The gearing 10 is configured for transferring power input by the driving unit 7 to at least two drive elements 8, 9 presently formed as wheels. In the present embodiment, the gearing 10 comprises a lubricant supply 60 including a lubricant pump 62 and a lubricant conduit 64 for supplying lubricant.

Figure 2 schematically shows a general layout of the gearing 10 according to an embodiment of the present disclosure. In the present embodiment, the gearing 10 is formed as a distribution gearing with two planetary gear sets. As can be seen from Figure 2, the gearing 10 comprises a first planetary gear set 70 having a first element 71, a second element 72 and a third element 73. Furthermore, the gearing 10 comprises a second planetary gear set 80 having a first element 81, a second element 82 and a third element 83. Power generated by the driving unit 7 can be introduced into the gearing 10 via an input shaft 4. The input shaft 4 is mechanically operatively connected to the first element 71 of the first planetary gear set 70, here by being permanently non-rotatably connected. The third element 73 of the first planetary gear set 70 is permanently non-rotatably connected to the first element 81 of the second planetary gear set 80, here by being integrally formed. The second element 82 of the second planetary gear set 80 is permanently non-rotatably fixed to a stationary member 12, here a housing for accommodating and supporting the first and second planetary gear sets 70, 80. A first output shaft 5 is mechanically operatively connected to the second element 72 of the first planetary gear set 70, in this case permanently non-rotatably connected, for outputting power to a first drive element 8. A second output shaft 6 is mechanically operatively connected to the third element 83 of the second planetary gear set 80, in this case permanently non-rotatably connected, for outputting power to a second drive element 9.

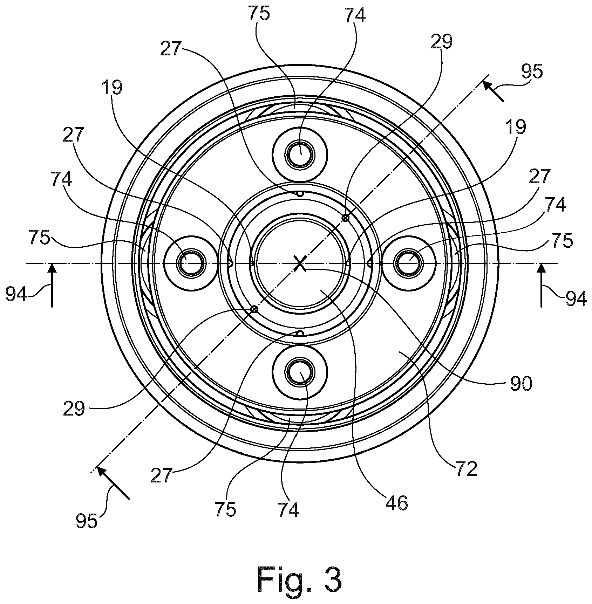

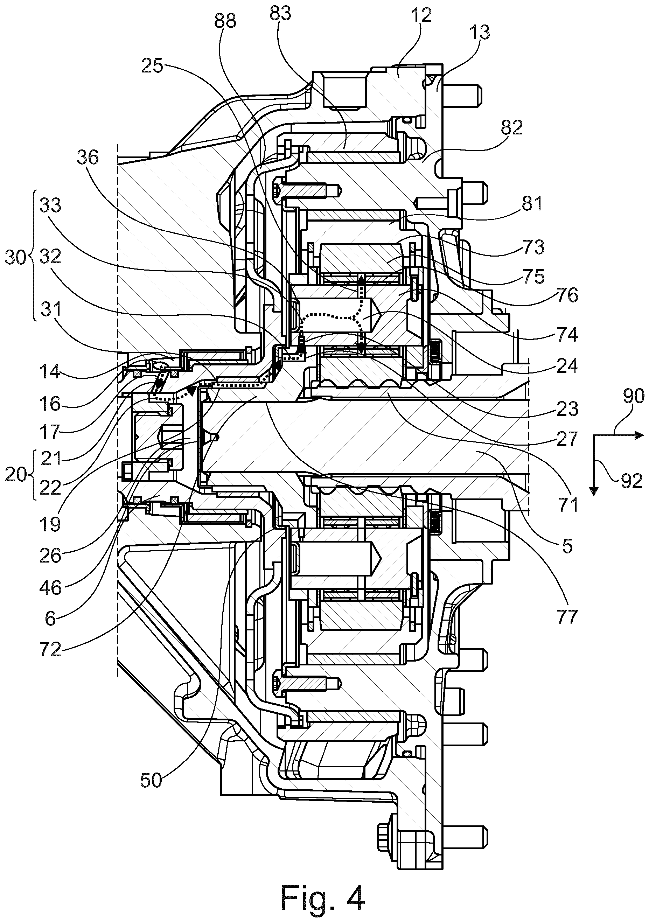

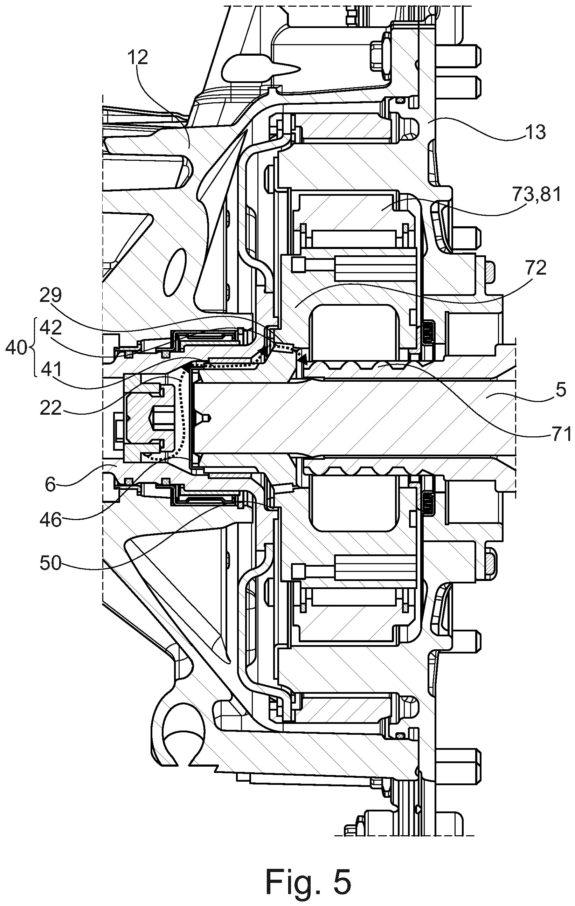

Figure 3 schematically shows a side view of a gearing 10 according to an embodiment of the present disclosure. Figure 4 schematically shows a cross-section of the gearing 10 along a first section line 94 in Figure 3. Figure 5 schematically shows a cross-section of the gearing 10 along a second section line 95 in Figure 3. The gearing 10 of Figures 3 to 5 is provided according to the general layout shown in Figure 2. In the present embodiment, each of the first elements 71, 81 is formed as a sun gear, each of the second elements 72, 82 is formed as a planetary carrier and each of the third elements 73, 83 is formed as a ring gear. In the view of Figure 3, the gearing 10 is viewed along an axial direction 90 (shown also in Figure 4) from a side of the second output shaft 6 in the direction of the first planetary carrier 72, which is the second element 72 of the first planetary gear set 70. All components overlapping the first planetary carrier 72 in the viewing direction are omitted from illustration in Figure 3 for the sake of simplicity. As can be seen in Figure 3, the first planetary carrier 72 is configured to support four planetary gears 75 on respective planetary pins 74. Each planetary pin 74 is supplied with lubricant via a respective first lubrication path channel 27. The first section line 94 passes through two of the planetary pins 74 as well as two of the first lubrication path channels 27 and two bypass channels 19, which will be explained further in the following with reference to Figure 4. The second section line 95 passes through two second lubrication path channels 29, which will be explained further in the following with reference to Figure 5.

As can be seen in Figure 4, the first planetary gear set 70 and the second planetary gear set 80 are offset in a radial direction 92. The first output shaft 5 is permanently non-rotatably connected to the first planetary carrier 72 via a spline 77. The second output shaft 6 is permanently non-rotatably connected to the second ring gear 83 via a coupling element 88. Furthermore, the second output shaft 6 is arranged coaxially to the first output shaft 5 and the first planetary carrier 72. In addition, a part of the first planetary carrier 72 extends into a hollow part of the second output shaft 6 such that an annular passage is formed in the radial direction 92 between the second output shaft 6 and the first planetary carrier 72. In the present embodiment, the first planetary carrier 72 is rotatably supported with respect to the second output shaft 6 by means of a bearing 18 which is presently formed as a needle bearing.

The gearing 10 of the present embodiment comprises means for lubricating the first sun gear 71 which corresponds to one planetary gear element, namely the first element 71 of the first planetary gear set 70. These means will be explained further in the following with reference to Figure 5. Furthermore, the gearing 10 comprises optional means for lubricating at least one of the planetary gears 75 and a respective planetary bearing 76 mounted on the respective planetary pin 74 fixed to the first planetary carrier 72. In the present embodiment, the planetary gear 75 and the planetary bearing 76 each correspond to another element of the first planetary gear set 70. In addition, the second output shaft 6 corresponds to a rotating element, and the first planetary carrier 72 corresponds to a further rotating element.

For lubrication, the gearing 10 comprises the lubricant supply 60 and a first lubrication path 20. A housing lubrication path section (not shown) of the first lubrication path 20 is in fluid communication with the lubricant supply 60 and extends via a plurality of channels formed in a first housing portion 12. The first housing portion 12 is part of a stationary member 12, 13 and is configured for accommodating and supporting the planetary gear sets 70, 80 as well as the second output shaft 6. The stationary member 12, 13 presently also comprises a second housing portion 13 configured for rotatably supporting the first output shaft 5 and non-rotatably supporting the second element 82 of the second planetary gear set 80. The lubricant supply 60 is configured to supply a lubricant, namely oil in the present embodiment, at a pressure suitable for providing the lubricant to the first sun gear 71, the planetary gear 75 and the planetary bearing 76 independently from any rotation of any of the elements 71, 72, 73, 81, 82, 83 of the first planetary gear set 70 and the second planetary gear set 80. The housing lubrication path section of the first lubrication path 20 presently extends from the lubricant supply 60 through the first housing portion 12 to the second output shaft 6, namely to a cavity 26 formed in the hollow part of the second output shaft 6. A second lubrication path 40 explained in detail further in the following with reference to Figure 5 extends from the cavity 26 through the first planetary carrier 72 to the first sun gear 71. An optional third lubrication path 30 presently extends from the cavity 26 through the first planetary carrier 72 and into the planetary pin 74. The planetary bearing 76 is presently formed so as to allow a flow of lubricant therethrough to the planetary gear 75.

An overview of the first lubrication path 20 and the third lubrication path 30 is shown in Figure 4. An opening 16, presently a plurality of openings 16, is formed in the first housing portion 12 for providing a fluid communication between the fluid supply 60 and a ring channel 14 formed in the first housing portion 12 so as to surround the second output shaft 6. From the ring channel 14, lubricant is transferred to the second output shaft 6, namely radially inwards into the cavity 26 of the second output shaft 6, by means of an output shaft opening 17, presently a plurality of output shaft openings 17. The cavity 26 is sealed on one axial side, namely the right side in Figure 4, by a shaft sealing cap 46 for preventing leakage of lubricant through the spline 77 non-rotatably connecting the first output shaft 5 to the first planetary carrier 72. In the cavity 26 of the second output shaft 6, the lubricant can flow from the output shaft openings 17 to the passage between the first planetary carrier 72 and the second output shaft 6. An axial end side of the passage, namely the right side in Figure 4, is sealed by a seal element 50. In the present embodiment, the seal element 30 is provided as an annular member with an L-shaped cross section and is fixed to the first planetary carrier 72. From the passage, the lubricant can flow into and through the first planetary carrier 72, either via the second lubrication path 40 to the first sun gear 71 (see Figure 5) or via the third lubrication path 30 into the planetary pin 74.

Further details of the first lubrication path 20 and the third lubrication path 30 of the gearing 10 are shown in detail in Figure 4. The first lubrication path 20 comprises a plurality of lubrication path sections 21, 22. In a first lubrication path section 21 of the first lubrication path 20, the lubricant supplied to the first housing portion 12 flows from the opening 16 of the first housing portion 12 through the ring channel 14 and the output shaft opening 17 into the cavity 26 of the second output shaft 6. Within the cavity 26, a second lubrication path section 22 of the first lubrication path 20 extends in the axial direction 90 towards the first planetary carrier 72. The lubricant flowing along the second lubrication path section 22 enters the passage between the first planetary carrier 72 and the inner side of the second output shaft 6. Said passage forms a third lubrication path section 31, 41. Parts of the third lubrication path section 31, 41 are common to the second lubrication path 40 and the third lubrication path 30. As illustrated in Figure 4, the bearing 18 is arranged in the third lubrication path section 31 of third the lubrication path 30. A plurality of bypass channels 19 are formed in the first planetary carrier 72 extending in the axial direction 90 so as to enable a flow of the lubricant in the third lubrication path section 31 of the third lubrication path 30 around the bearing 18.

At an axial end of the third lubrication path section 31 of the third lubrication path 30, the lubricant enters a first lubrication channel 27 forming a further lubrication path section 32 of the third lubrication path 30. The first lubrication path channel 27 is formed in the first planetary carrier 72 and has an axially extending portion and a radially extending portion. From the first lubrication path channel 27, the lubricant is received by the planetary pin 74 via a first planetary channel 23. The first planetary channel 23 extends radially and is connected to a second planetary channel 24, which presently extends in an axial direction of the planetary pin 74 and is sealed on one end by a sealing cap 36. A plurality of third planetary channels 25 extend in the radial direction from the second planetary channel 24 to the planetary bearing 76. The planetary channels 23, 24, 25 form an additional lubrication path section 33 of the third lubrication path 30. Accordingly, the lubricant can flow from the cavity 26 via the lubrication path section 31, the further lubrication path section 32 and the additional lubrication path section 33 of the third lubrication path 30 to the planetary bearing 76 and the planetary gear 75.

An overview of the second lubrication path 40 for lubricating the first sun gear 71 is shown in Figure 5. With respect to the first lubrication path 20, only the second lubrication path section 22 is illustrated in Figure 5. From the second lubrication path section 22 of the first lubrication path 20, lubricant flows via the third lubrication path section 41 of the second lubrication path 40 into a second lubrication path channel 29 extending obliquely through the first planetary carrier 72 towards the first sun gear 71. From an axial end of the second lubrication path channel 29, namely the right end in Figure 5, the lubricant is supplied to the first sun gear 71, here by being ejected onto the first sun gear 71. The second lubrication path channel 29 thus forms a further lubrication path section 42 of the second lubrication path 40. Accordingly, the lubricant can flow from the cavity 26 via the lubrication path section 41 and the further lubrication path section 42 of the second lubrication path 40 to the first sun gear 71.

With the gearing 10 of the present embodiment comprising the lubricant supply 60 and the first and second lubrication paths 20, 40, lubricant can be reliably supplied to the first sun gear 71 regardless of any rotation of any of the elements of the planetary gear sets 70, 80. Furthermore, with the optional third lubrication path 30, lubricant can also be reliably supplied to the planetary bearing 76 and the planetary gear 75 regardless of any rotation of any of the elements of the planetary gear sets 70, 80. In particular, the designs of the lubricant supply 60 and the lubrication paths 20, 30, 40 are coordinated with each other such that lubrication of the first sun gear 71 and optionally the planetary bearing 76 and the planetary gear 75 is possible at high or low rotational speeds of the planetary gearsets 70, 80 and even at standstill. Thereby, stable and reliable lubrication is provided for the gearing 10.

### Reference signs

- 1: vehicle
- 4: input shaft
- 5, 6: output shaft
- 7: driving unit
- 8, 9: drive element
- 10: gearing
- 12, 13: stationary member
- 14: ring channel
- 16, 17: opening
- 18: bearing
- 19: bypass channel
- 20, 30, 40: lubrication path
- 21, 22, 31, 32, 33, 41, 42: lubrication path section
- 23, 24, 25: planetary channel
- 26: cavity
- 27, 29: lubrication path channel
- 36, 46: sealing cap
- 50: seal element
- 60: lubricant supply
- 62: lubricant pump
- 64: lubricant conduit
- 70, 80: planetary gear set
- 71, 81, 72, 82, 73, 83: element
- 74: planetary pin
- 75: planetary gear
- 76: planetary bearing
- 77: spline
- 88: coupling element
- 90: axial direction
- 92: radial direction
- 94, 95: section view

## Claims

1. A gearing (10) for a vehicle (1) comprising a rotating element (6), a planetary gear set (70) with multiple planetary gear elements (71, 72, 73, 74, 75, 76), a lubricant supply (60), a housing portion (12), a first lubrication path (20) and a second lubrication path (40), wherein the gearing (10) is configured to supply lubricant for lubrication independently from any rotation of any of the planetary gear elements (71, 72, 73, 74, 75, 76) of the planetary gear set (70), the lubricant being supplied from the lubricant supply (60) via the first lubrication path (20) through the housing portion (12) to the rotating element (6) and from the rotating element (6) via the second lubrication path (40) to one of the planetary gear elements (71) formed as a sun gear.

2. The gearing (10) according to claim 1, **characterized by** comprising a lubrication path section (31; 41) of a lubrication path (30; 40) formed between the rotating element (6) and a further rotating element (72).

3. The gearing (10) according to claim 2, **characterized in that** the second lubrication path (40) comprises a further lubrication path section (42) formed in the further rotating element (72) for receiving lubricant from the lubrication path section (41) of the second lubrication path (40) and for guiding the received lubricant towards the one planetary gear element (71).

4. The gearing (1) according to any one of the preceding claims, **characterized by** comprising a third lubrication path (30), wherein the lubricant is supplied from the rotating element (6) via the third lubrication path (30) to another of the planetary gear elements (75; 76).

5. The gearing (10) according to claims 2 and 4, **characterized in that** the third lubrication path (30) comprises a further lubrication path section (32) formed in the further rotating element (72) for receiving lubricant from the lubrication path section (31) of the third lubrication path (30) and for guiding the received lubricant towards the other planetary gear element (75; 76).

6. The gearing (10) according to any one of claims 2 to 5, **characterized in that** the further rotating element (72) is formed as a planetary carrier of the planetary gear set (70).

7. The gearing (10) according to claim 6, **characterized in that** the planetary carrier comprises a planetary pin (74) on which the other planetary gear element (75; 76) is mounted, and **in that** the third lubrication path (30) comprises an additional lubrication path section (33) formed in the planetary pin (74) for receiving lubricant from a section (32) of the third lubrication path (30) and for guiding the received lubricant towards the other planetary gear element (75; 76).

8. The gearing (10) according to any one of the preceding claims, **characterized in that** the rotating element (6) is formed as an output shaft.

9. The gearing (10) according to any one of claims 2 to 8, **characterized in that** the gearing (10) comprises a seal element (50) configured to seal the lubrication path section (31; 41) between the rotating element (6) and the further rotating element (72) while allowing relative rotation between the rotating element (6) and the further rotating element (72).

10. The gearing (10) according to claim 9, **characterized in that** the seal element (50) is fixed to the further rotating element (72).

11. The gearing (10) according to any one of the preceding claims, **characterized in that** the lubricant supply (60) comprises a lubricant pump (62) for supplying pressurized lubricant to the rotating element (6).

12. The gearing (10) according to any one of the preceding claims, **characterized in that** the gearing (10) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein an input shaft (4) is non-rotatably connected to the first element (71) of the first planetary gear set (70), the second element (72) of the first planetary gear set (70) is non-rotatably connected to a first output shaft (5), the third element (73) of the first planetary gear set (70) is non-rotatably connected to the first element (81) of the second planetary gear set (80), the second element (82) of the second planetary gear set (80) is non-rotatably connected to a stationary member (12), and the third element (83) of the second planetary gear set (80) is non-rotatably connected to a second output shaft (6), wherein the rotating element (6) is formed by one of the output shafts (5; 6) and the one planetary gear element (71) and the other planetary gear element (75; 76) are each one of the elements (71, 72, 73, 74, 75, 76, 81, 82, 83) of the first and second planetary gear sets (70, 80).

13. The gearing (10) according to claim 12, **characterized in that** the rotating element (6) is formed by the second output shaft (6) and the further rotating element (72) is formed as the second element (72) of the first planetary gear set (70).

14. The gearing (10) according to claim 12 or 13, **characterized by** comprising a sealing cap (46) covering an axial end of the first output shaft (5) facing the first lubrication path (20) so as to prevent lubricant leakage from the first lubrication path (20) through an element (77) forming the non-rotatable connection of the first output shaft (5) and the second element (72) of the first planetary gear set (70).

15. A vehicle (1) comprising a gearing (10) according to any one of the preceding claims.
